# FASCICULE DE BREVET EUROPEEN

(11) **EP 4 423 351 B1**
(45) Date de publication et mention de la délivrance du brevet: **19.11.2025**
(21) Numéro de dépôt: 22809147.6
(22) Date de dépôt: 26.10.2022
(51) Int. Cl.: E04F 13/08, E04F 13/14

(54) **DISPOSITIF DE FIXATION D'UN PANNEAU DE BARDAGE SUR UNE STRUCTURE**
VORRICHTUNG ZUR BEFESTIGUNG EINER VERKLEIDUNGSPLATTE AN EINER STRUKTUR
DEVICE FOR ATTACHING A CLADDING PANEL TO A STRUCTURE

(30) Priorité: 29.10.2021 FR 2111549
(43) Date de publication de la demande: 04.09.2024
(73) Titulaire: SB Ingénierie, 74330 Poisy (FR)
(72) Inventeur: GIACOMETTI, Sylvianne, 74330 Choisy (FR); CHAPEL, Romain, 74540 Saint Sylvestre (FR)
(74) Mandataire: Ipsilon
(86) Numéro de dépôt international: PCT/EP2022/080016
(87) Numéro de publication internationale: WO 2023/073068

(56) Documents cités:
- EP-A2- 1 878 847
- EP-B1- 3 405 625
- CH-A5- 659 679
- DE-U1- 29 906 465

## Description

### Domaine technique de l'invention

L'invention concerne un dispositif de fixation d'un panneau vertical de bardage, notamment d'un panneau de verre, sur une structure, le dispositif de fixation comportant :
- une traverse destinée à être fixée sur la structure et comportant un bord d'accrochage ;
- un crochet destiné à être accroché à la traverse par un premier mouvement d'approche durant lequel le crochet est approché de la traverse, longitudinalement vers l'arrière, au-dessus du bord, puis par un deuxième mouvement d'accrochage par coulissement vertical vers le bas selon un sens d'accrochage, le crochet comportant des moyens de fixation sur une face arrière du panneau ;
- des moyens de blocage en coulissement vers le haut du crochet dans un sens de décrochage lorsqu'il est accroché à la traverse.

### Arrière-plan technique

Il est connu de fixer un panneau de bardage vertical transversal sur une structure à l'aide d'un dispositif de fixation.

De manière connue, le dispositif de fixation comporte un support qui est solidaire de la structure et un crochet qui est solidaire du panneau. Le crochet est accroché sur le support de manière à positionner le panneau sur la structure.

Pour prévenir le décrochage des panneaux, on connaît des solutions par serrage du crochet par rapport au support, par exemple par insertion de coins au moyen d'un marteau ou par serrage longitudinal d'une plaque crantée contre une face verticale du crochet.

Ces solutions ne sont pas satisfaisantes car elles nécessitent un serrage suffisant de l'élément de verrouillage contre le crochet. Faute d'un serrage suffisant, le panneau risque de se décrocher. En outre, ces solutions nécessitent l'utilisation d'outils à l'arrière du panneau après son installation, souvent à l'aveugle, dans des conditions d'accessibilité très contraintes.

Il existe par conséquent le besoin de trouver une solution de fixation qui permette de prévenir le décrochage d'un panneau vertical transversal par rapport à sa structure de fixation, et qui soit d'un montage facile et rapide.

On connaît par exemple de EP3405625, CH659679 et EP1878847 des fixations de panneaux fastidieuses à mettre en place et à serrer de façon suffisante pour assurer la tenue dans le temps.

### Résumé de l'invention

L'invention propose un dispositif de fixation d'un panneau vertical de bardage, notamment d'un panneau de verre, comportant :
- une traverse comportant un bord d'accrochage ;
- un crochet destiné à être accroché à la traverse par un premier mouvement d'approche durant lequel le crochet est approché de la traverse, longitudinalement vers l'arrière, au-dessus du bord, puis par un deuxième mouvement d'accrochage par coulissement vertical vers le bas selon un sens d'accrochage, le crochet comportant des moyens de fixation sur une face arrière du panneau ;
- des moyens de blocage en coulissement vers le haut du crochet dans un sens de décrochage lorsqu'il est accroché à la traverse.

Le dispositif de fixation selon l'invention est caractérisé en ce que les moyens de blocage comportent un élément de blocage qui est monté mobile sur un corps du crochet entre :
- une position de libération vers laquelle il est poussé longitudinalement vers l'arrière automatiquement par contact avec la traverse lors du mouvement d'approche ;
- une position de blocage vers laquelle il est rappelé élastiquement vers l'avant et dans laquelle l'élément de blocage est destiné à être engagé au-dessous d'une face de butée de la traverse à la fin du mouvement d'accrochage pour interdire le décrochage du crochet.

Selon un autre aspect du dispositif de fixation de l'invention, l'élément de blocage est monté pivotant sur le crochet par l'intermédiaire d'un organe de rappel élastique, l'élément de blocage étant serré verticalement contre la face de butée lorsque le crochet est monté sur la traverse.

Selon un autre aspect du dispositif de fixation de l'invention, l'organe de rappel élastique est formé par un ressort à fil asymétrique comportant deux pattes de longueurs différentes dont chacune comporte une extrémité de liaison avec l'élément de blocage et une extrémité libre monté pivotante autour d'un axe transversal de pivotement dans le corps du crochet, les axes de pivotement de chaque patte étant distincts.

Selon un autre aspect du dispositif de fixation de l'invention, l'élément de blocage est formé par le tronçon plié d'un fil de ressort dont deux tronçons d'extrémité forment les deux pattes de l'organe de rappel élastique.

Selon un autre aspect du dispositif de fixation de l'invention, l'élément de rappel élastique comporte un poussoir qui est accessible au doigt d'un utilisateur lorsque le crochet est accroché à la traverse et qui permet, par effet de levier de commander manuellement l'élément de blocage vers sa position de libération à l'encontre de l'effort de rappel élastique.

Selon un autre aspect du dispositif de fixation de l'invention, le poussoir est formé par un tronçon du fil de ressort constituant l'élément de blocage.

Selon un autre aspect du dispositif de fixation de l'invention, les moyens de fixation du crochet sur le panneau comportent un flasque de contact avec le panneau qui est lié au corps du crochet avec un débattement angulaire autour d'un axe longitudinal.

Selon un autre aspect du dispositif de fixation de l'invention, le flasque est monté dans le corps du crochet par l'intermédiaire d'une entretoise cylindrique d'axe longitudinal reçue pivotante dans un orifice du crochet, un pion étant fixé en travers de l'entretoise à travers une lumière du corps débouchant transversalement dans l'orifice, deux bords opposés de la lumière définissant des butées de débattement par contact avec le pion lors du pivotement du flasque.

Selon un autre aspect du dispositif de fixation de l'invention, il comporte un cavalier pour immobiliser transversalement le crochet par rapport à la traverse, le cavalier étant destiné à être fixé au moins transversalement sur la traverse.

L'invention propose aussi un ensemble comprenant un panneau de bardage, et au moins un dispositif de fixation réalisés selon les enseignements de l'invention qui comporte au moins deux crochets qui sont agencés le long d'un bord supérieur du panneau, contre une face arrière du panneau, les deux crochets étant destinés à être accrochés à la même traverse.

Selon un autre aspect de l'ensemble réalisé selon les enseignements de l'invention, un seul des crochets du dispositif de fixation comporte un cavalier pour immobiliser transversalement le crochet par rapport à la traverse, l'autre desdits crochets étant configuré pour être accroché à la traverse associée libre en coulissement selon une direction transversale.

### Brève description des figures

D'autres caractéristiques et avantages de l'invention apparaitront au cours de la lecture de la description détaillée qui va suivre pour la compréhension de laquelle on se reportera aux dessins annexés qui sont brièvement décrits ci-dessous.
La figure 1 est une vue en perspective d'une structure sur laquelle sont fixés des panneaux de bardage au moyen de dispositifs de fixation réalisés selon les enseignements de l'invention.
La figure 2 est une vue en perspective de l'arrière d'un panneau de bardage qui est muni de deux crochets supérieurs réalisés selon les enseignements de l'invention.
La figure 3 est une vue de côté qui représente un crochet du dispositif de fixation réalisé selon les enseignements de l'invention situé à distance d'une traverse dudit dispositif de fixation.
La figure 4 est une vue similaire à celle de la figure 1 qui représente uniquement la structure équipée de plusieurs traverses identiques à celle de la figure 3.
La figure 5 est une vue similaire à celle de la figure 3 qui représente le crochet dans une position accrochée à la traverse.
La figure 6 est une vue en perspective qui représente l'avant du crochet des figures 3 et 5.
La figure 7 est une vue en perspective qui représente l'arrière du crochet de la figure 6.
La figure 8 est une vue similaire à celles des figures 3 et 5 qui représente le crochet dans une position approchée en butée contre la traverse.
La figure 9 est une vue éclatée de côté qui représente les moyens de fixation du crochet au panneau.
La figure 10 est une vue en perspective qui représente le crochet en position accrochée sur la traverse, et un premier mode de réalisation d'un cavalier destiné à immobiliser le coulissement transversal du crochet dans la traverse.
La figure 11 est une vue similaire à celle de la figure 10 dans laquelle le cavalier est mis en position sur le crochet.
La figure 12 est une vue en perspective qui représente le crochet en position accrochée sur la traverse, et un deuxième mode de réalisation d'un cavalier destiné à immobiliser le coulissement transversal du crochet dans la traverse.
La figure 13 est une vue similaire à celle de la figure 12 dans laquelle le cavalier est mis en position sur le crochet.

### Description détaillée de l'invention

Dans la suite de la description, des éléments présentant une structure identique ou des fonctions analogues seront désignés par une même référence.

Dans la suite de la description, on adoptera à titre non limitatif une orientation longitudinale "L", dirigée orthogonalement au plan du panneau, depuis l'arrière vers l'avant, une orientation verticale "V" dirigée de haut en bas et une orientation transversale "T" dirigée de gauche à droite.

L'orientation verticale "V" est ici dirigée globalement selon le sens de la gravité terrestre.

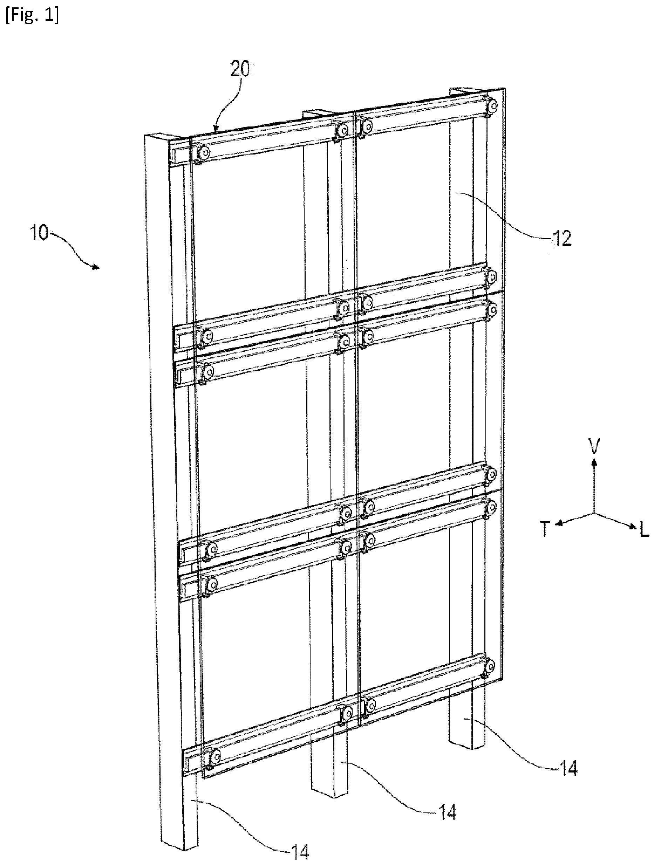

On a représenté à la figure 1 une structure 10 verticale sur laquelle sont fixés des panneaux 12 de bardage.

La structure 10 verticale est ici formée de montants 14 verticaux qui sont agencés parallèlement à distance les uns des autres selon une direction transversale. Les montants 14 sont par exemple fixés à un mur tel qu'une façade d'un bâtiment ou un mur extérieur. Les montants peuvent être fixés soit en contact avec le mur, soit à distance du mur.

En variante, la structure est formée directement par un mur tel qu'une façade ou un mur extérieur.

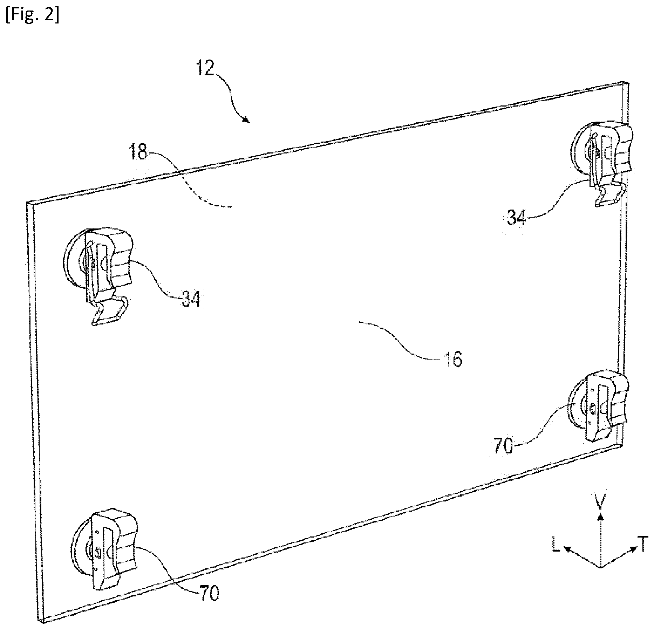

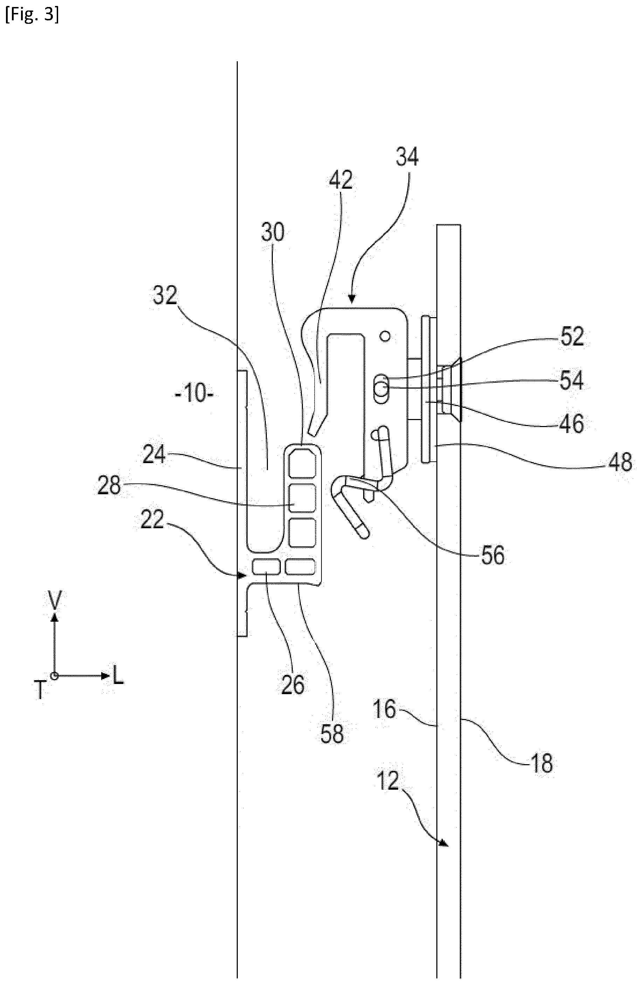

Comme représenté aux figures 2 et 3, chaque panneau 12 de bardage présente ici une forme rectangulaire. Il s'agit par exemple de panneaux de verre. Le panneau de verre peut éventuellement intégrer des cellules photovoltaïques pour former un panneau solaire. Chaque panneau 12 de bardage s'étend dans un plan transversal vertical. Chaque panneau 12 de bardage est délimité longitudinalement par une face 16 arrière, tournée vers la structure 10 et une face 18 avant opposée à la face 16 arrière. Il s'agit de panneaux 12 de bardage de grandes dimensions, par exemple de plus de 1 m de haut. De tels panneaux 12 de bardage présentent en outre un poids très important, par exemple de l'ordre de 300 kg.

Chaque panneau 12 de bardage est fixé à la structure 10 par l'intermédiaire d'au moins un dispositif 20 de fixation.

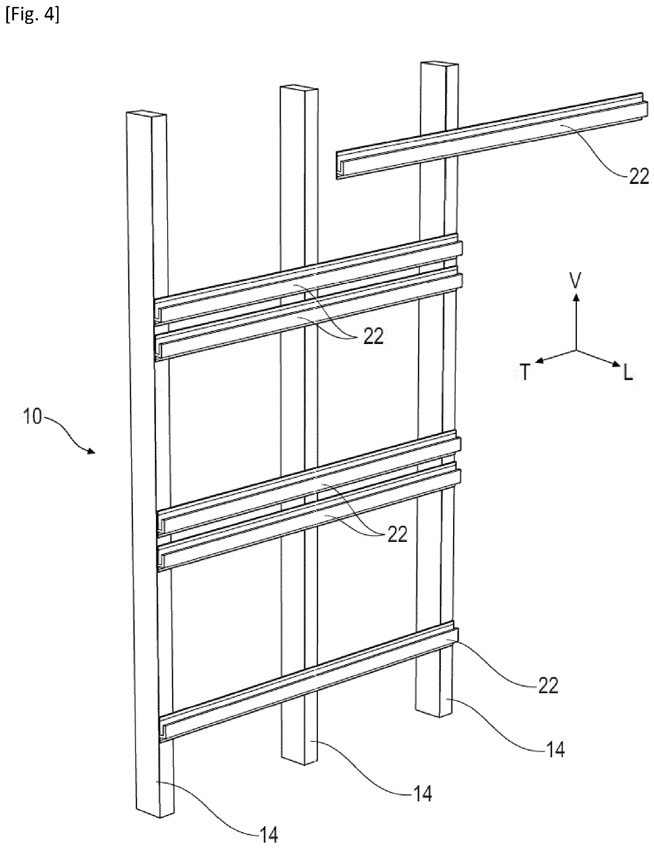

Comme représenté à la figure 4, un tel dispositif 20 de fixation comporte une traverse 22 destinée à être fixée sur la structure 10. La traverse 22 s'étend selon un axe principal transversal perpendiculairement aux montants 14. La traverse 22 est fixée à au moins deux montants 14 par deux tronçons d'extrémité libre de manière à s'étendre transversalement entre les deux montants 14.

Du fait de la présence de ces montants 14, il est possible d'interposer une couche de matériau isolant (non représentée) entre les traverses 22 et le mur auquel les montants 14 sont fixés.

En variante, lorsque la structure est formée par un mur, les traverses 22 sont fixées directement en contact avec le mur.

Les traverses 22 sont ici agencées par colonnes verticales. Lorsqu'on souhaite que tous les panneaux 12 de bardage soient alignés transversalement, les traverses 22 de deux colonnes adjacentes sont alignées transversalement. Lorsqu'on souhaite au contraire agencer les panneaux en quinconce, les traverses 22 d'une colonne sont décalées verticalement par rapport aux traverses 22 des colonnes adjacentes.

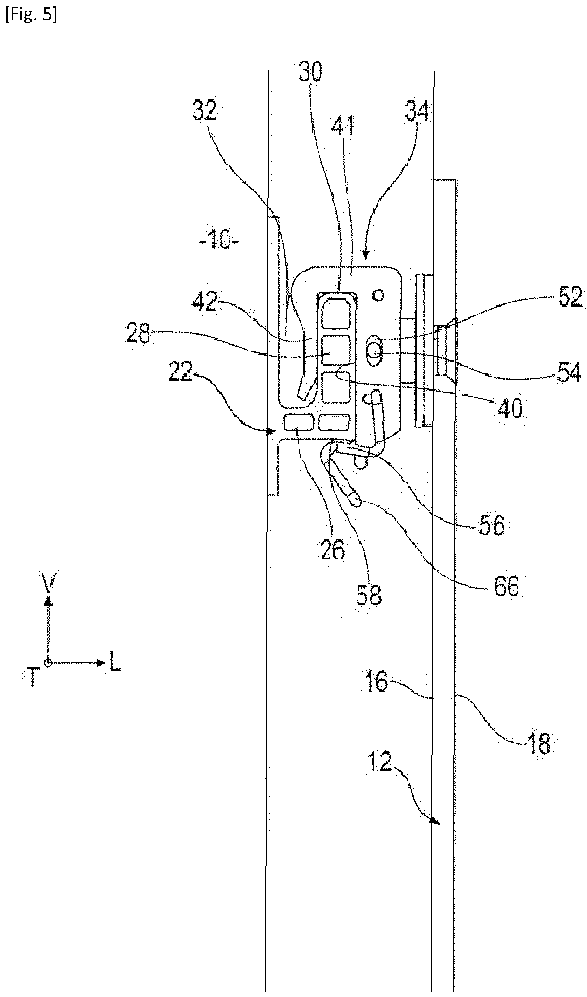

La traverse 22 se présente sous la forme d'un profilé dont la section est représentée en détails aux figures 3 et 5. La traverse 22 présente ainsi une semelle 24 en forme de plaque verticale. La semelle 24 présente une face arrière qui est destinée à être appuyée contre la structure 10, ici formé des montants 14 pour permettre sa fixation, par exemple par vissage.

La section de la traverse 22 comporte aussi une âme 26 qui s'étend longitudinalement en saillie par rapport à une face avant de la semelle 24. Une aile 28 s'étend verticalement vers le haut depuis un bord d'extrémité avant de l'âme 26. L'aile 28 est délimitée vers le haut par un bord 30 d'extrémité libre. Le bord 30 d'extrémité libre sera appelé par la suite "bord 30 d'accrochage".

L'aile 28, l'âme 26 et la semelle 24 délimitent une rainure 32 ouverte vers le haut.

Le dispositif 20 de fixation comporte au moins un crochet 34. Le dispositif 20 de fixation comporte ici deux crochets 34 qui sont agencés à deux coins supérieurs de la face arrière 16 du panneau 12, comme représenté à la figure 2. Les deux crochets 34 étant identiques, un seul de ces crochets 34 sera décrit par la suite.

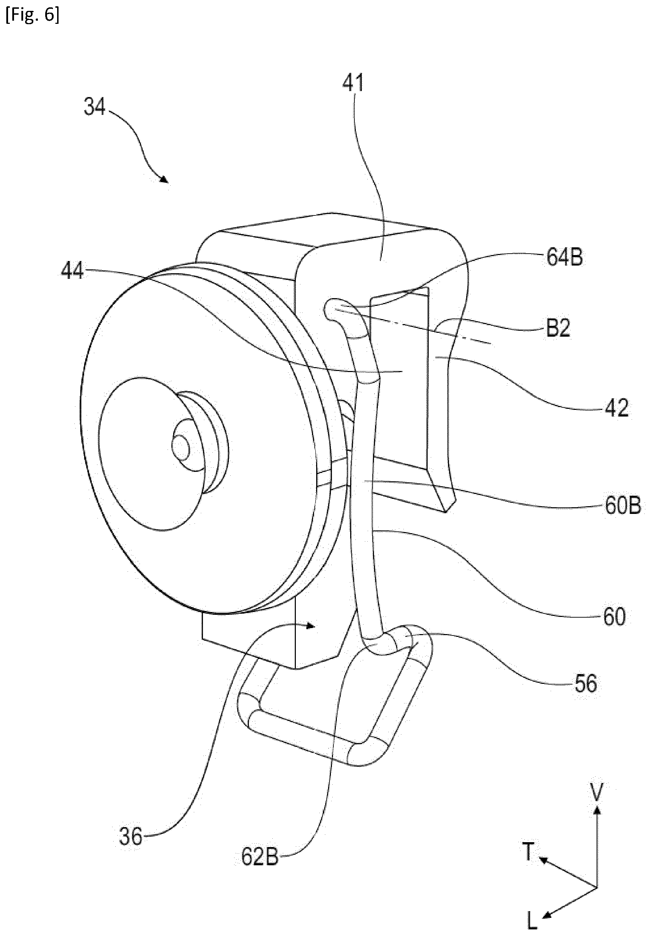

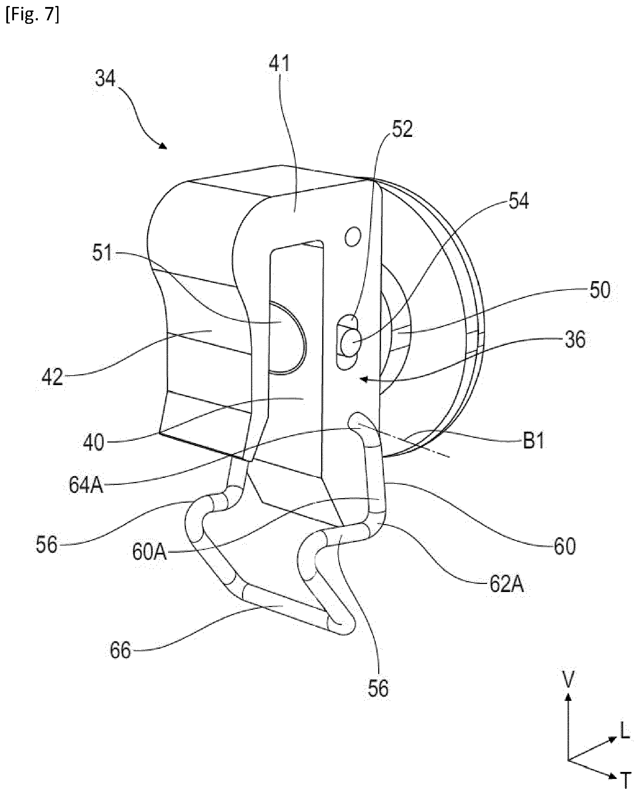

Comme représenté aux figures 6 et 7, le crochet 34 comporte un corps 36 qui s'étend selon une direction principale verticale. Le corps 36 présente une face 38 avant qui est destinée à être agencée en vis-à-vis de la face 16 arrière du panneau 12, comme illustré à la figure 5. Le corps 36 présente par ailleurs une face 40 arrière verticale transversale. Le corps 36 présente à son extrémité supérieure un bras 41 qui s'étend en équerre longitudinalement vers l'arrière. Une aile 42 s'étend verticalement vers le bas depuis une extrémité arrière du bras 41. Une face 44 avant de l'aile 42 est agencée à en vis-à-vis de la face 40 arrière du corps 36. L'aile 42, le corps 36 et le bras 41 délimitent ainsi l'intérieur du crochet 34.

Une extrémité inférieure libre de l'aile 42 est située au-dessus du niveau de l'extrémité inférieure du corps 36 de sorte qu'une partie inférieure de la face 40 arrière du corps dépasse verticalement vers le bas par rapport à l'aile 42.

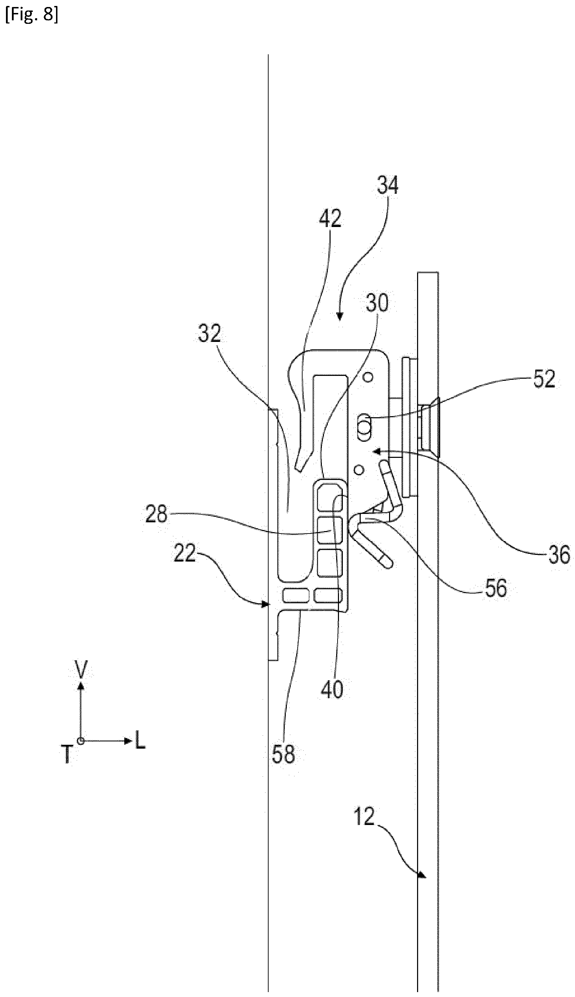

Le crochet 34 est ainsi destiné à être accroché à la traverse 22 par un premier mouvement d'approche durant lequel le crochet 34 est approché de la traverse 22 par translation selon une direction d'approche longitudinale dirigée vers l'arrière, passant de la position représentée en figure 3 à la position représentée en figure 8. Durant ce mouvement d'approche, l'extrémité inférieure de l'aile 42 passe au-dessus du bord 30 d'accrochage de la traverse 22 jusqu'à ce que l'aile 42 soit agencée au droit de la rainure 32. Dans cette position, la partie inférieure de la face 40 arrière du corps 36 est en butée contre la face avant de l'aile 28 de la traverse 22. Puis dans un deuxième mouvement d'accrochage, le crochet 34 est coulissé verticalement vers le bas selon un sens d'accrochage de manière que l'aile 42 du crochet 34 soit reçue dans la rainure 32, passant de la position représentée à la figure 8 à la position indiquée à la figure 5. Le mouvement d'accrochage continu jusqu'à ce que le bras 41 soit en appui sur le bord 30 d'accrochage de la traverse 22 pour suspendre le panneau 12. Le mouvement d'accrochage est guidé par le contact glissant entre la face 40 arrière du corps 36 et la face avant de l'aile 28 de la traverse 22.

En outre, pour garantir que le bord 30 d'accrochage soit bien reçu dans le crochet 34, entre l'aile 42 et le corps 36, l'aile 42 comporte à son extrémité inférieure un tronçon légèrement courbé vers l'arrière pour former une rampe de guidage du bord 30 d'accrochage. De même, la face 40 arrière du corps 36 comporte une extrémité inférieure biseautée pour guider le bord 30 d'accrochage entre l'aile 42 et le corps 36 du crochet 34.

Le crochet 34 comporte aussi des moyens de fixation sur la face 16 arrière du panneau 12.

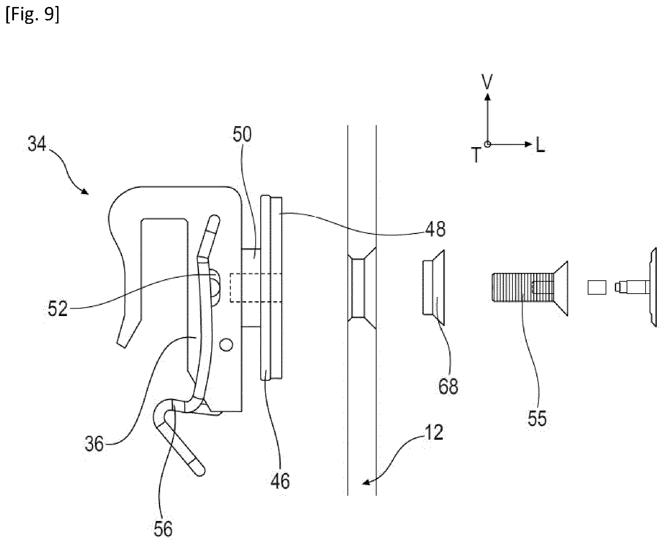

A titre d'exemple non limitatif représenté à la figure 9, dans le mode de réalisation représenté aux figures, les moyens de fixation du crochet 34 comportent un flasque 46 de contact avec la face 16 arrière du panneau 12. Le flasque 46 se présente ici sous la forme d'un disque d'axe longitudinal dont une face avant est garnie d'un tampon 48, par exemple en matériau élastomère, pour éviter d'endommager le panneau 12 de verre.

Avantageusement, mais pas obligatoirement, le flasque 46 est monté dans le corps 36 du crochet 34 avec un débattement angulaire autour de son axe longitudinal. Ceci permet notamment de rattraper un défaut de verticalité de la traverse 22 afin de garantir que tous les crochets 34 du panneau 12 soient correctement accrochés à la traverse 22.

Dans le mode de réalisation représenté aux figures 7 et 9, le flasque 46 est monté dans le corps 36 du crochet 34 par l'intermédiaire d'une entretoise 50 cylindrique d'axe longitudinal reçue pivotante autour dudit axe dans un orifice de forme complémentaire qui débouche dans la face 38 avant du corps 36. L'entretoise 50 comporte ici un téton 51 central d'extrémité arrière à insérer dans l'orifice associé du corps 36 pour positionner correctement l'entretoise 50 selon une direction longitudinale par butée contre une face d'épaulement de l'orifice du corps 36. Le corps 36 comporte au moins une lumière 52 qui débouche transversalement dans un de ses bords latéraux verticaux. La lumière débouche transversalement dans l'orifice du corps 36. La lumière 52 présente une forme oblongue allongée verticalement et limitée verticalement par deux bords d'extrémité, comme cela est particulièrement visible aux figures 5 et 7.

Un pion 54 est fixé en travers de l'entretoise 50 de manière que le pion 54 fasse saillie à travers la lumière 52 associée du corps 36. Le pion 54 est ainsi solidaire en pivotement avec le cylindre autour de l'axe longitudinal. Les deux bords d'extrémité verticale de la lumière définissent des butées de débattement par contact avec le pion 54 lors du pivotement du flasque 46 par rapport au crochet 34.

Comme représenté à la figure 9, le crochet 34 est ici fixé au panneau par l'intermédiaire d'une vis 55 qui est destinée à être vissée dans un taraudage (non représenté) central de l'entretoise 50 qui débouche dans la face avant du flasque 46.

Selon les enseignements de l'invention, le crochet 34 comporte des moyens de blocage en coulissement vers le haut dans un sens de décrochage lorsqu'il est accroché à la traverse 22. Les moyens de blocage comportent un élément 56 de blocage qui est monté mobile sur le corps 36 du crochet entre :
- une position de libération vers laquelle il est poussé longitudinalement vers l'arrière automatiquement par contact avec la traverse 22 lors du mouvement d'approche, comme représenté à la figure 8 ; et
- une position de blocage vers laquelle il est rappelé élastiquement vers l'avant et dans laquelle l'élément 56 de blocage est destiné à être engagé au-dessous d'une face 58 de butée de la traverse 22 à la fin du mouvement d'accrochage pour interdire le décrochage du crochet 34, comme représenté à la figure 5.

Pour permettre de pousser automatiquement l'élément 56 de blocage vers sa position de libération, l'élément 56 de blocage est agencé en saillie vers l'arrière par rapport à la face 40 arrière du corps 36 lorsqu'il occupe sa position de blocage, comme représenté à la figure 5.

Plus particulièrement, la face 58 de butée est ici formée par une face inférieure de l'âme 26 de la traverse 22.

L'élément 56 de blocage est de préférence agencé au droit de la portion de crochet 34 qui est appuyée sur le bord 30 d'accrochage, lorsque le crochet 34 est monté sur la traverse 34.

L'élément 56 de blocage est ici monté pivotant sur le corps 36 du crochet 34 par l'intermédiaire d'un organe 60 de rappel élastique qui permet de fournir l'effort de rappel élastique vers sa position de blocage. Cet organe 60 de rappel élastique permet aussi de serrer l'élément 56 de blocage verticalement contre la face 58 de butée lorsque le crochet 34 est monté sur la traverse 22.

L'élément 56 de blocage est plus particulièrement monté pivotant autour d'un axe globalement transversal de pivotement qui est ici situé au-dessus de l'élément 56 de blocage. Dans sa position de libération, l'élément 56 de blocage est agencé au-dessous du corps 36 du crochet de manière à libérer l'accès du bord 34 à l'intérieur du crochet 34, et en position de blocage, l'élément 56 de blocage est situé en avant du corps 36 du crochet 34, au-dessus de sa position de libération.

En position de blocage, l'élément 56 de blocage est plus particulièrement agencé au droit de son axe de pivotement de manière qu'un effort vertical appliqué à l'élément 56 de blocage n'entraîne aucun mouvement de ce dernier.

Comme représenté aux figures 6 et 7, l'organe 60 de rappel élastique est ici formé par un ressort à fil asymétrique comportant deux pattes 60A, 60B de longueurs différentes dont chacune comporte une extrémité 62A, 62B de liaison avec l'élément 56 de blocage et une extrémité 64A, 64B libre monté pivotante autour d'un axe "B1, B2" transversal de pivotement fixe dans le corps 36 du crochet 34. Les extrémités 62A, 62B de liaison des pattes 60A, 60B sont agencées sensiblement à la même hauteur.

L'extrémité 64A, 64B libre des pattes 60A, 60B est par exemple recourbée orthogonalement à la patte vers le corps 36 pour être insérées dans des trous correspondant.

Chaque patte 60A, 60B s'étend ici globalement verticalement lorsque l'élément 56 de blocage occupe sa position de blocage. Les extrémités 62A, 62B de liaison forment des extrémités inférieures des pattes 60A, 60B, tandis que les extrémités 64A, 64B libres sont ici des extrémités supérieures des pattes 60A, 60B. Les axes "B1, B2" de pivotement de chaque patte 60A, 60B sont distincts. Ils sont ici décalés verticalement du fait de la différence de longueur des deux pattes 60A, 60B. L'axe de pivotement de l'élément 56 de bocage est alors situé globalement entre les deux axes "B1, B2".

Ce décalage des axes "B1, B2" de pivotement combiné avec l'élasticité du fil entraîne une flexion élastique des pattes 60A, 60B lorsque l'élément 56 de blocage est poussé vers sa position de libération. Les pattes 60A, 60B sont alors rappelées vers leur position verticale par leur élasticité propre.

En variante non représentée de l'invention, l'organe de rappel élastique peut aussi être réalisé par d'autres moyens. L'organe de rappel élastique est par exemple réalisé par un ressort de torsion ou encore par un ressort à lame flexible élastiquement.

L'élément 56 de blocage et l'organe 60 de rappel élastique sont avantageusement réalisés en une seule pièce.

Dans l'exemple représenté aux figures, l'élément 56 de blocage est ici formé par le tronçon plié d'un fil de ressort dont deux tronçons d'extrémité forment les deux pattes 60A, 60B de l'organe 60 de rappel élastique. L'élément 56 de blocage est par exemple réalisé par le pliage du fil constituant chaque patte 60A, 60B vers l'arrière.

Il peut être avantageux dans certains cas de pouvoir décrocher le crochet 34 de manière simple, par exemple pour pouvoir remplacer un panneau 12 défectueux. A cet effet, l'élément 56 de rappel élastique comporte aussi un poussoir 66 qui est accessible au doigt d'un utilisateur lorsque le crochet 34 est accroché à la traverse 22. Ce poussoir 66 permet, par effet de levier de commander manuellement l'élément 56 de blocage vers sa position de libération à l'encontre de l'effort de rappel élastique.

Pour augmenter l'effet de levier, le poussoir 66 est ici agencé au-dessous de l'élément 56 de blocage. Le poussoir 66 est plus particulièrement porté par l'élément 56 de blocage, comme représenté aux figures 5 et 7.

Le poussoir 66 est avantageusement formé par un tronçon du fil de ressort constituant l'élément 56 de blocage.

Ainsi, l'organe 60 de rappel élastique, l'élément 56 de blocage et le poussoir 66 sont ici réalisé par pliage d'un même fil de ressort. Le fil de ressort comporte deux tronçons d'extrémité formant les pattes 60A, 60B. Un tronçon est ensuite replié vers l'arrière à la base des pattes 60A, 60B pour former l'élément 56 de blocage. Un tronçon de fil situé à l'arrière de l'élément 56 de blocage est recourbé vers l'avant au-dessous de l'élément 56 de blocage pour former le poussoir 66.

Pour monter le panneau 12 sur une structure 10, la traverse 22 est tout d'abord fixée aux montants 14, comme représenté à la figure 4.

Puis au moins deux crochets 34 sont montés à proximité de chaque coin supérieur du panneau 12. Ces deux crochets 34 sont destinés à être accrochés à la même traverse 22.

Le panneau 12 est ici percé de deux trous. Chaque crochet 34 est agencé de manière que son flasque 46 soit à plat contre la face 16 arrière du panneau 12, le taraudage central étant en coïncidence avec un trou associé du panneau 12. La vis 55 est ensuite insérée dans le taraudage en passant par le trou. La tête de la vis 55 est serrée contre la face 16 avant du panneau 12, de préférence avec interposition d'une rondelle 68 pour permettre de répartir les efforts de serrage sur tout le pourtour du trou, comme représenté à la figure 9. Les deux crochets 34 sont ainsi fixés au panneau 12.

Comme représenté à la figure 2, les coins inférieurs du panneau 12 sont ici munis de crochets 70 qui présentent la même structure que les crochets 34 précédemment décrits, à ceci près qu'ils ne comportent pas de moyens pour empêcher leur décrochement. Ces crochets 70 sont destinés à être accrochés à une traverse 22 identique à celle du dispositif de fixation précédemment décrit.

Lors de l'accrochage, le panneau 12 est positionné parallèlement aux traverses 22, à distance de la structure 10, comme représenté à la figure 3. Puis le premier mouvement d'approche est réalisé selon la direction d'approche jusqu'à ce que la face 40 arrière du corps 36 des crochets 34 soit en contact avec la face avant de l'aile 28 de la traverse 22, comme représenté à la figure 8. Lors de ce mouvement, une extrémité arrière de l'élément 56 de blocage vient buter contre la face avant de l'aile 28 de la traverse 22, ce qui provoque son déplacement vers l'arrière dans sa position de libération à l'encontre de l'effort de rappel élastique de l'organe 60 de rappel élastique.

Puis, lors du mouvement d'accrochage, le panneau est coulissé vers le bas selon la direction d'accrochage. Les crochets 34 viennent alors s'accrocher au bord 30 d'accrochage de la traverse 22, comme représenté à la figure 5. Les crochets 34 sont alors en appui sur la traverse 22 à l'encontre du poids du panneau 12.

Ce faisant, l'élément 56 de blocage glisse aussi vers le bas et lorsqu'il arrive au-dessous de l'âme 26, il est rappelé élastiquement vers sa position de blocage dans laquelle il est serré contre la face 58 de butée, au-dessous de l'âme 26.

Lorsqu'un effort de décrochage est appliqué au panneau, l'élément 56 de blocage bute contre la face 58 de butée pour empêcher le panneau 12 de bouger. L'effort de décrochage est transmis au corps 36 du crochet 34 par l'intermédiaire des pattes 60A, 60B verticales sans entraîner de mouvement de l'élément 56 de blocage.

Les crochets 70 inférieurs sont aussi accrochés à leur traverse 22 de la même façon et dans le même mouvement du panneau 12. Cependant, les crochets 70 inférieurs ne sont pas en appui sur leur traverse 22 pour permettre un jeu de dilatation verticale du panneau 22.

Dans cette position, le panneau 12 est encore susceptible de coulisser transversalement dans la rainure 32 de la traverse 22.

Pour bloquer ce dernier degré de liberté du panneau 12, il est prévu un cavalier 72 qui est destiné à être agencé sur l'un des crochets 34 supérieurs. Le cavalier 72 comporte deux jambes 74 reliés par un pont 76 transversal. Les deux jambes 74 sont agencées transversalement de part et d'autre du crochet 34, par exemple par emboîtement vertical vers le bas.

Le cavalier 72 comporte en outre des moyens pour être immobilisé au moins transversalement par rapport à la traverse 22.

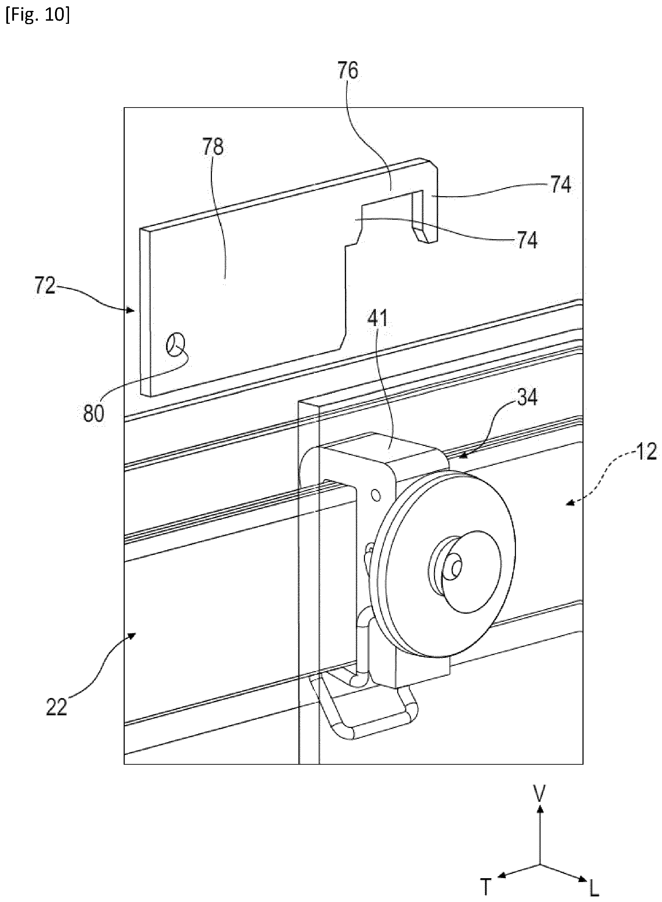

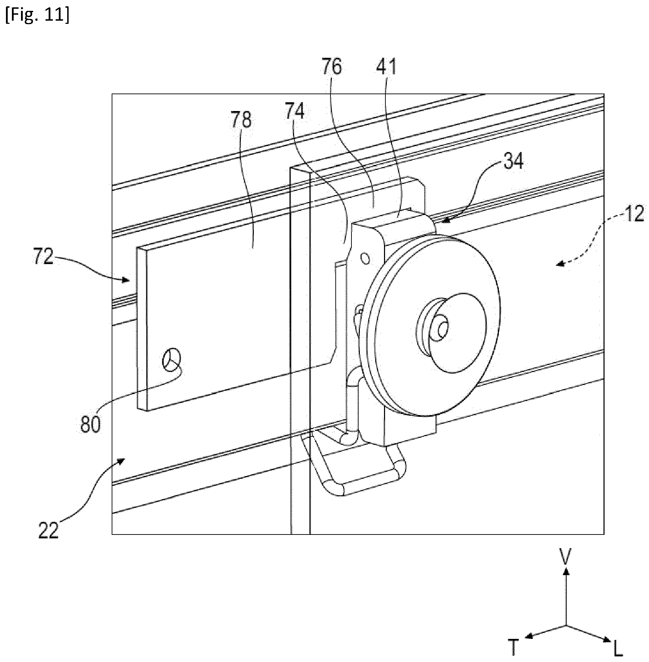

Selon un premier mode de réalisation du cavalier 72 représenté aux figures 10 et 11, les moyens d'immobilisation sont formés par une plaque 78 qui est fixée au cavalier 72. La plaque 78 est par exemple réalisée en une pièce avec le cavalier 72. Cette plaque 78 comporte un orifice 80 de fixation qui est destiné à être agencé contre une face de la traverse 22 lorsque le cavalier 72 est emboîté autour du crochet 34. La plaque 78 est alors fixée à la traverse au moyen d'une vis (non représentée) à travers l'orifice 80 de fixation. Cette disposition permet de bloquer le déplacement transversal du panneau 12. En outre, la plaque 78 est conçue pour s'étendre au-delà du bord du panneau 12 selon une direction transversale pour permettre sa fixation par vissage après installation du panneau 12.

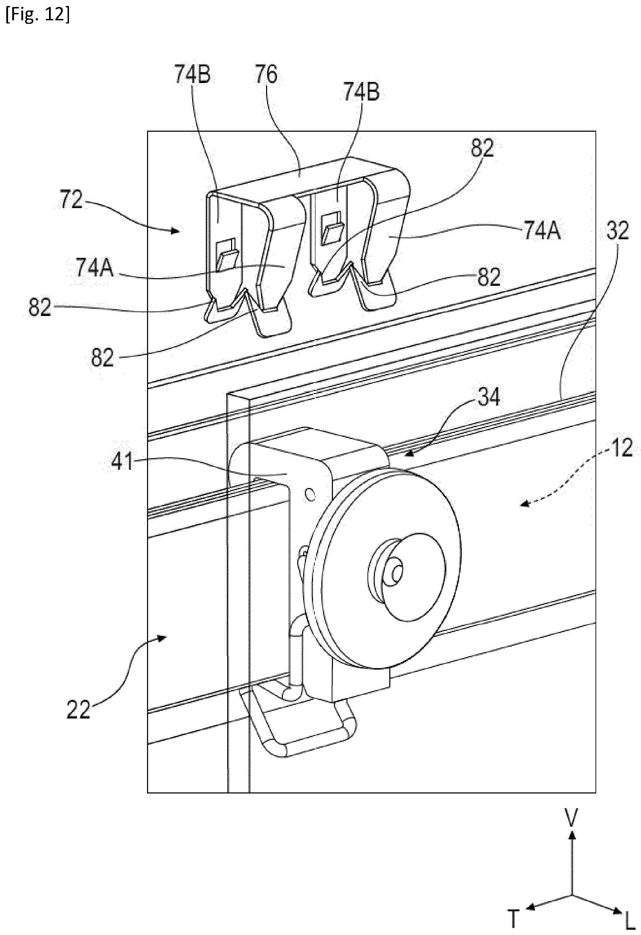

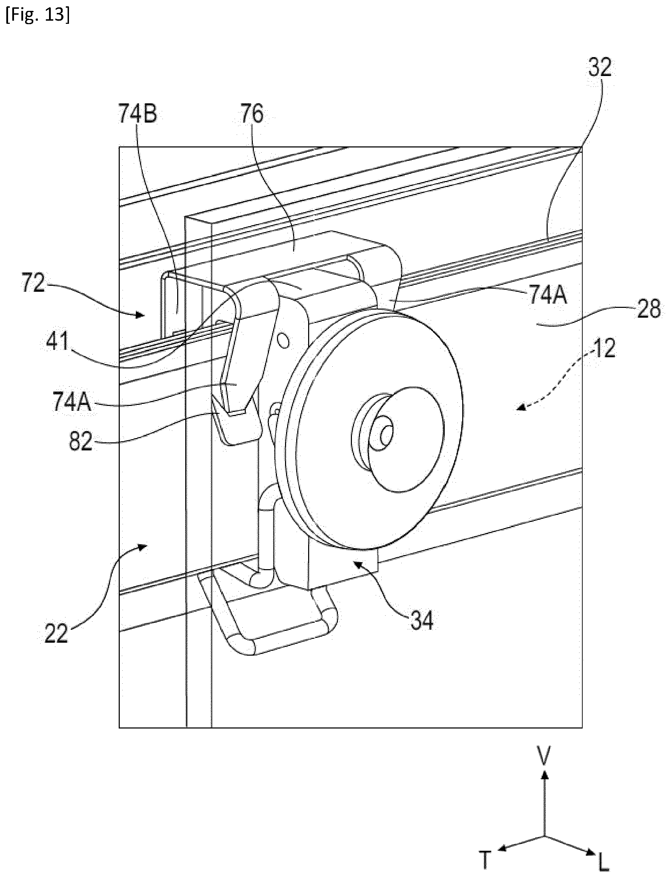

Selon un deuxième mode de réalisation du cavalier 72 représenté aux figures 12 et 13, les moyens d'immobilisation sont des moyens par pinçage. Le cavalier 72 est alors muni de deux paires de jambes 74A, 74B de part et d'autre du crochet 34. Chaque paire comporte une jambe 74A avant et une jambe 74B arrière. Les jambes 74A, 74B de chaque paire sont agencées longitudinalement en vis-à-vis l'une de l'autre et elles sont rappelées élastiquement l'une vers l'autre selon une direction longitudinale. Chaque jambe 74A, 74B d'une paire est munie d'au moins un éperon 82 qui est dirigé vers l'autre jambe 74A, 74B de la paire.

Lorsque le cavalier 72 est emboîté sur le crochet 34, la jambe 74B arrière de chaque paire est reçue à l'intérieur de la rainure 32, tandis que la jambe 74A avant est reçue contre la face avant de l'aile 28 de la traverse 22, à l'extérieur de la rainure 32. Les deux jambes 74A, 74B de chaque enserrent alors l'aile 28 de la traverse 22 de manière que leurs éperons 82 viennent mordre dans le matériau constituant la traverse 22. Les éperons 82 permettent ainsi de fixer le cavalier 72 à la traverse 22.

## Revendications

1. Dispositif (20) de fixation d'un panneau (12) vertical de bardage, notamment d'un panneau de verre, comportant :
- une traverse (22) comportant un bord (30) d'accrochage ;
- un crochet (34) destiné à être accroché à la traverse (22) par un premier mouvement d'approche durant lequel le crochet (34) est approché de la traverse, longitudinalement vers l'arrière, au-dessus du bord (30), puis par un deuxième mouvement d'accrochage par coulissement vertical vers le bas selon un sens d'accrochage, le crochet (34) comportant des moyens de fixation sur une face (16) arrière du panneau (12) ;
- des moyens de blocage en coulissement vers le haut du crochet (34) dans un sens de décrochage lorsqu'il est accroché à la traverse (22) ;
**caractérisé en ce que** les moyens de blocage comportent un élément (56) de blocage qui est monté mobile sur un corps (36) du crochet (34) entre :
- une position de libération vers laquelle il est poussé longitudinalement vers l'arrière automatiquement par contact avec la traverse (22) lors du mouvement d'approche ;
- une position de blocage vers laquelle il est rappelé élastiquement vers l'avant et dans laquelle l'élément (56) de blocage est destiné à être engagé au-dessous d'une face (58) de butée de la traverse (22) à la fin du mouvement d'accrochage pour interdire le décrochage du crochet (34).

2. Dispositif (20) de fixation selon la revendication précédente, **caractérisé en ce que** l'élément (56) de blocage est monté pivotant sur le crochet (34) par l'intermédiaire d'un organe (60) de rappel élastique, l'élément (56) de blocage étant serré verticalement contre la face (58) de butée lorsque le crochet (34) est monté sur la traverse (22).

3. Dispositif (20) de fixation selon la revendication précédente, **caractérisé en ce que** l'organe (60) de rappel élastique est formé par un ressort à fil asymétrique comportant deux pattes (60A, 60B) de longueurs différentes dont chacune comporte une extrémité (62A, 62B) de liaison avec l'élément (56) de blocage et une extrémité (64A, 64B) libre monté pivotante autour d'un axe (B1, B2) transversal de pivotement dans le corps (36) du crochet (34), les axes (B1, B2) de pivotement de chaque patte (60A, 60B) étant distincts.

4. Dispositif (20) selon la revendication précédente, **caractérisé en ce que** l'élément (56) de blocage est formé par le tronçon plié d'un fil de ressort dont deux tronçons d'extrémité forment les deux pattes (60A, 60B) de l'organe (60) de rappel élastique.

5. Dispositif (20) selon l'une quelconque des revendications précédentes, **caractérisé en ce que** l'élément (56) de rappel élastique comporte un poussoir (66) qui est accessible au doigt d'un utilisateur lorsque le crochet (34) est accroché à la traverse (22) et qui permet, par effet de levier de commander manuellement l'élément (56) de blocage vers sa position de libération à l'encontre de l'effort de rappel élastique.

6. Dispositif (20) selon la revendication précédente, prise en combinaison avec la revendication 4, **caractérisé en ce que** le poussoir (66) est formé par un tronçon du fil de ressort constituant l'élément (56) de blocage.

7. Dispositif (20) selon l'une quelconque des revendications précédentes, **caractérisé en ce que** les moyens de fixation du crochet (34) sur le panneau (12) comportent un flasque (46) de contact avec le panneau (12) qui est lié au corps (36) du crochet avec un débattement angulaire autour d'un axe longitudinal.

8. Dispositif (20) selon la revendication précédente, **caractérisé en ce que** le flasque (46) est monté dans le corps (36) du crochet (34) par l'intermédiaire d'une entretoise (50) cylindrique d'axe longitudinal reçue pivotante dans un orifice du crochet (34), un pion (54) étant fixé en travers de l'entretoise (50) à travers une lumière (52) du corps (36) débouchant transversalement dans l'orifice, deux bords opposés de la lumière (52) définissant des butées de débattement par contact avec le pion (54) lors du pivotement du flasque (46).

9. Dispositif (20) selon l'une quelconque des revendications précédentes, **caractérisé en ce qu'**il comporte un cavalier (72) pour immobiliser transversalement le crochet (34) par rapport à la traverse (22), le cavalier (72) étant destiné à être fixé au moins transversalement sur la traverse (22).

10. Ensemble comprenant un panneau (12) de bardage, et au moins un dispositif (20) de fixation réalisés selon l'une quelconque des revendications précédentes, qui comporte au moins deux crochets (34) qui sont agencés le long d'un bord supérieur du panneau (12), contre une face (16) arrière du panneau (12), les deux crochets (34) étant destinés à être accrochés à la même traverse (22).

11. Ensemble selon la revendication précédente prise en combinaison avec la revendication 9, **caractérisé en ce qu'**un seul des crochets (34) du dispositif (20) de fixation comporte un cavalier (72) pour immobiliser transversalement le crochet (34) par rapport à la traverse (22), l'autre desdits crochets (34) étant configuré pour être accroché à la traverse (22) associée libre en coulissement selon une direction transversale.

## Patentansprüche

1. Vorrichtung (20) zur Befestigung eines vertikalen Verkleidungspaneels, insbesondere eines Glaspaneels, aufweisend:
- eine Querstrebe (22) die einen Verankerungsrand (30) aufweist;
- einen Haken (34), der dazu bestimmt ist, mittels einer ersten Annäherungsbewegung, während derer der Haken (34) in Längsrichtung nach hinten, oberhalb des Randes (30) der Querstrebe (22) angenähert wird, gefolgt von einer zweiten Einhakbewegung durch vertikales Gleiten nach unten gemäß einer Einhakrichtung, an der Querstrebe (22) verankert zu werden, wobei der Haken (34) Mittel zur Befestigung an einer Rückseite (16) des Paneels (12) aufweist;
- Mittel zur Blockierung der nach oben gerichteten Gleitbewegung des Hakens (34) gemäß einer Aushakrichtung, wenn er an der Querstrebe (22) verankert ist;
**dadurch gekennzeichnet, dass** die Blockierungsmittel ein Blockierungselement (56) aufweisen, das derart an einem Körper (36) des Hakens (34) angebracht ist, dass es zwischen Folgendem bewegt werden kann:
- einer Freisetzungsposition, in welche es in Längsrichtung nach hinten geschoben werden kann, und zwar auf automatische Weise durch den Kontakt mit der Querstrebe (22) bei der Annäherungsbewegung;
- einer Blockierungsposition, in welche es nach vorn elastisch zurückgestellt wird und in welcher das Blockierungselement (56) dazu bestimmt ist, nach Abschluss der Einhakbewegung unterhalb einer Anschlagfläche (58) der Querstrebe (22) in Eingriff zu sein, um ein Aushaken des Hakens (34) zu verhindern.

2. Befestigungsvorrichtung (20) nach dem vorhergehenden Anspruch, **dadurch gekennzeichnet, dass** das Blockierungselement (56) über ein elastisches Rückstellorgan (60) drehbar an dem Haken (34) angebracht ist, wobei der Blockierungselement (56) vertikal gegen die Anschlagfläche (58) geklemmt ist, wenn der Haken (34) an der Querstrebe (22) angebracht ist.

3. Befestigungsvorrichtung (20) nach dem vorhergehenden Anspruch, **dadurch gekennzeichnet, dass** das elastische Rückstellorgan (60 von einer asymmetrischen Drahtfeder gebildet wird, die zwei Schenkel (60A, 60B) mit unterschiedlichen Längen aufweist, welche jeweils ein Ende (62A, 62B) zur Verbindung mit dem Blockierungselement (56) und ein freies Ende (64A, 64B) aufweisen, welches innerhalb des Körpers (36) des Hakens (34) derart angebracht ist, dass es sich um eine quergerichtete Drehachse (B1, B2) drehen kann, wobei sich die Drehachsen (B1, B2) der jeweiligen Schenkel (60A, 60B) voneinander unterscheiden.

4. Vorrichtung (20) nach dem vorhergehenden Anspruch, **dadurch gekennzeichnet, dass** das Blockierungselement (56) von dem gebogenen Teilstück eines Federdrahts gebildet wird, dessen zwei Endstücke die beiden Schenkel (60A, 60B) des elastischen Rückstellorgans (60) bilden.

5. Vorrichtung (20) nach einem beliebigen der vorhergehenden Ansprüche, **dadurch gekennzeichnet, dass** das elastische Rückstellelement (56) ein Druckorgan (66) aufweist, welches für den Finger eines Benutzers zugänglich ist, wenn der Haken (34) an der Querstrebe (22) verankert ist, und welches es durch eine Hebelwirkung ermöglicht, das Blockierungselement (56) entgegen der elastischen Rückstellkraft von Hand in seine Freisetzungsposition zu stellen.

6. Vorrichtung (20) nach dem vorhergehenden Anspruch, in Kombination mit dem Anspruch 4, **dadurch gekennzeichnet, dass** das Druckorgan (66) von einem Teilstück der Drahtfeder gebildet wird, welches das Blockierungselement (56) bildet.

7. Vorrichtung (20) nach einem beliebigen der vorhergehenden Ansprüche, **dadurch gekennzeichnet, dass** die Mittel zur Befestigung des Hakens (34) an dem Paneel (12) einen Flansch (46) zur Kontaktherstellung mit dem Paneel (12) aufweisen, welcher derart an den Körper (36) des Hakens gebunden ist, dass ein Winkelspiel rundum die Längsachse verbleibt.

8. Vorrichtung (20) nach dem vorhergehenden Anspruch, **dadurch gekennzeichnet, dass** der Flansch (46) über ein zylindrisches Längsachsen-Zwischenstück (50), welches drehbar in einer Öffnung des Hakens (34) aufgenommen ist, im Körper (36) des Hakens (34) angebracht ist; wobei ein Stift (54) durch einen Hohlraum (52) des Körpers (36), welcher in Querrichtung in die Öffnung einmündet, derart befestigt ist, dass er das Zwischenstück (50) durchsetzt, wobei die beiden gegenüberliegenden Ränder des Hohlraums (52) die Hin- und Herbewegung anschlagartig begrenzen, indem sie bei der Drehbewegung des Flansches (46) mit dem Stift (54) in Kontakt kommen.

9. Vorrichtung (20) nach einem beliebigen der vorhergehenden Ansprüche, **dadurch gekennzeichnet, dass** sie einen Reiter (72) aufweist, um den Haken (34) gegenüber der Querstrebe (22) zu arretieren, wobei der Reiter (72) dazu bestimmt ist, zumindest in Querrichtung an der Querstrebe (22) befestigt zu werden.

10. Gesamtheit, die ein Verkleidungspaneel (12) sowie mindestens eine Befestigungsvorrichtung (20) umfasst, die nach einem beliebigen der vorhergehenden Ansprüche hergestellt wurde, wobei sie mindestens zwei Haken (34) aufweist, die entlang eines oberen Randes des Paneels (12) derart angeordnet sind, dass sie an einer Rückseite des Paneels (12) anliegen, wobei die Haken (34) dazu bestimmt sind, an derselben Querstrebe (22) eingehakt zu werden.

11. Gesamtheit nach dem vorhergehenden Anspruch, in Kombination mit dem Anspruch 9, **dadurch gekennzeichnet, dass** nur einer der Haken (34) der Befestigungsvorrichtung (20) einen Reiter (72) aufweist, um den Haken (34) in Querrichtung (34) gegenüber der Querstrebe (22) zu arretierten, wobei der andere der Haken (34) dafür ausgelegt ist, derart an der zugehörigen Querstrebe (22) eingehakt zu werden, dass er gemäß einer Querrichtung frei gleiten kann.

## Claims

1. Device (20) for securing a vertical cladding panel (12), in particular a glass panel, comprising:
- a cross-member (22) comprising a hooking edge (30);
- a hook (34) intended to be hooked to the cross-member (22) by a first approach movement during which the hook (34) is moved closer to the cross-member, longitudinally rearwards, above the edge (30), then by a second hooking movement by sliding vertically downwards in a hooking direction, the hook (34) comprising means for securing to a rear face (16) of the panel (12);
- means for blocking the hook (34) sliding upwards in an unhooking direction when it is hooked to the cross-member (22);
**characterised in that** the blocking means comprise a blocking element (56) which is mounted movably on a body (36) of the hook (34) between:
- a release position towards which it is pushed longitudinally rearwards automatically by contact with the cross-member (22) during the approach movement;
- a blocking position towards which it is elastically biased forward and in which the blocking element (56) is intended to be engaged below a stop face (58) of the cross-member (22) at the end of the hooking movement in order to prevent the hook (34) from being unhooked.

2. Securing device (20) according to the preceding claim, **characterised in that** the blocking element (56) is pivotally mounted on the hook (34) via an elastic return member (60), the blocking element (56) being clamped vertically against the stop face (58) when the hook (34) is mounted on the cross-member (22).

3. Securing device (20) according to the preceding claim, **characterised in that** the elastic return member (60) is formed by an asymmetrical wire spring comprising two tabs (60A, 60B) of different lengths, each of which comprises an end (62A, 62B) for connection with the blocking element (56) and a free end (64A, 64B) mounted pivotably about a transverse pivot axis (B1, B2) in the body (36) of the hook (34), the pivot axes (B1, B2) of each tab (60A, 60B) being distinct.

4. Device (20) according to the preceding claim, **characterised in that** the blocking element (56) is formed by the folded section of a spring wire, two end sections of which form the two tabs (60A, 60B) of the elastic return member (60).

5. Device (20) according to any one of the preceding claims, **characterised in that** the elastic return element (56) comprises a pusher (66) which is accessible to the finger of a user when the hook (34) is hooked to the cross-member (22) and which makes it possible, by lever effect, to manually control the blocking element (56) towards its release position against the elastic return force.

6. Device (20) according to the preceding claim, taken in combination with claim 4, **characterised in that** the pusher (66) is formed by a section of the spring wire constituting the blocking element (56).

7. Device (20) according to any one of the preceding claims, **characterised in that** the means for securing the hook (34) to the panel (12) comprise a flange (46) for contact with the panel (12) which is connected to the body (36) of the hook with angular clearance about a longitudinal axis.

8. Device (20) according to the preceding claim, **characterised in that** the flange (46) is mounted in the body (36) of the hook (34) via a cylindrical spacer (50) with a longitudinal axis pivotally received in an orifice of the hook (34), a pin (54) being fixed across the spacer (50) through a lumen (52) of the body (36) opening transversely into the orifice, two opposite edges of the lumen (52) defining travel stops in contact with the pin (54) during the pivoting of the flange (46).

9. Device (20) according to any one of the preceding claims, **characterised in that** it comprises a staple (72) for transversely immobilizing the hook (34) relative to the cross-member (22), the staple (72) being intended to be fixed at least transversely to the cross-member (22).

10. Assembly comprising a cladding panel (12), and at least one securing device (20) made according to any one of the preceding claims, which comprises at least two hooks (34) which are arranged along an upper edge of the panel (12), against a rear face (16) of the panel (12), the two hooks (34) being intended to be hooked to the same cross-member (22).

11. Assembly according to the preceding claim taken in combination with claim 9, **characterised in that** only one of the hooks (34) of the securing device (20) comprises a staple (72) for transversely immobilizing the hook (34) relative to the cross-member (22), the other of said hooks (34) being configured to be hooked to the associated cross-member (22) free to slide in a transverse direction.
